# EUROPÄISCHE PATENTSCHRIFT

(11) **EP 1 030 172 B1**
(45) Veröffentlichungstag und Bekanntmachung des Hinweises auf die Patenterteilung: **08.06.2005**
(21) Anmeldenummer: 00102098.1
(22) Anmeldetag: 03.02.2000
(51) Int. Cl.: G01N 21/89

(54) **Verfahren und Vorrichtung zum Detektieren, Kennzeichnen und Wiederauffinden von Fehlern eines Materialbandes**
Method and device for detecting, marking and retrieving of defects in a material web
Méthode et dispositif pour détecter, marquer et retrouver des défauts d'une bande de matériau

(30) Priorität: 18.02.1999 DE 19906701
(43) Veröffentlichungstag der Anmeldung: 23.08.2000
(73) Patentinhaber: Parsytec Computer GmbH, 52068 Aachen (DE)
(72) Erfinder: Denuell,Hans-Jörg, 52072 Aachen (DE)
(74) Vertreter: Lins, Edgar, Dipl.-Phys. Dr.jur.

(56) Entgegenhaltungen:
- EP-A- 0 279 505
- EP-A- 0 303 722
- DE-C- 3 325 125
- US-A- 3 835 332
- US-A- 3 980 891

## Beschreibung

Die Erfindung bezieht sich auf ein Verfahren und eine Vorrichtung zum Detektieren, Kennzeichnen und Wiederauffinden von Fehlern eines kontinuierlich aufgewickelten Materialbandes großer Länge.

Bei der Herstellung von z.B. Papier, Stahl und Kunststoffen wird das erzeugte Material von den Fertigungsmaschinen in großen Längen ausgegeben. Bei derartigen Endlosverfahren wird das erzeugte Bandmaterial im Allgemeinen von einem optischen Inspektionssystem auf Defekte bzw. Fehler, wie z.B. Oberflächenfehler, untersucht. Wird ein Fehler entdeckt, kann das aus der Fertigungsmaschine kommende Materialband in der Regel jedoch nicht angehalten werden, um einen Materialbereich mit den Fehlern herauszuschneiden, da der Produktionsvorgang nicht unterbrochen werden soll. Somit wird bei Detektion eines Defekts lediglich die entsprechende Stelle des Materialbands markiert, um diese Stelle später wieder auffinden zu können. Zum Entladen der Fertigungsmaschine wird das Materialband z.B. durch Aufwickeln zu Materialrollen in größeren Mengen gesammelt. Nachdem eine größere Materialmenge gesammelt ist, wird das Materialband abgeschnitten und das angesammelte Materialband z.B. als Rolle entfernt.

Bei einem späteren Zurückbewegen des Bandes, z.B. durch Umwickeln, können diese markierten Stellen dann wieder aufgefahren nachuntersucht und gegebenenfalls herausgeschnitten werden. Die markierten Stellen werden dabei im allgemeinen manuell angefahren, damit keine Markierungen übersehen werden.

Bei großen Bandlängen ist das manuelle Anfahren der markierten Stellen jedoch sehr zeit- und personalaufwendig. Das Materialband muss mit einer mittleren Geschwindigkeit abgewickelt werden und von einer Kontrollperson auf mögliche Markierungen untersucht werden. Zwar ist es grundsätzlich möglich, die beim Entladen gesammelten Materialbandrollen mit entsprechenden Kennzeichnungen zu versehen, um das Vorliegen und die Positionsangabe von Fehlern anzuzeigen. Da die Materialbandrollen jedoch im allgemeinen unterschiedliche Längen haben, da sie je nach den Erfordernissen des Produktionsvorgangs größer oder kleiner ausfallen können und insbesondere auch zum Teil bereits vor dem Umwickeln undefiniert lange Stücke vom Band abgeschnitten werden, um Stichproben zu entnehmen oder unregelmäßige Bereiche am Ende des Materialbandes zu entfernen, reichen derartige Vermerke für eine genaue Positionsbestimmung der Fehlerstellen jedoch nicht aus. Dementsprechend muss derzeit das Bandmaterial sorgfältig manuell abgewickelt und auf mögliche Markierungen untersucht werden.

Die EP 0 303 722 A1 zeigt ein Verfahren und eine Vorrichtung zum Erfassen und Behandeln von Fehlern in Stoffbahnen, bei dem ein Fehler dadurch registriert wird, dass dessen Position in einer X-Richtung durch eine auf der Stoffbahn gesetzte Marke und mindestens eine weitere Positionsangabe zusammen mit einer Bezeichnung der Marke festgehalten wird. Es werden als weitere Positionsangaben X- und Y-Werte einer eine Begrenzungslinie um den Fehler festlegenden Punktschar ermittelt und abgespeichert, wobei für deren X- und Y-Werke die Marke bzw. eine Seitenkante der Stoffbahn als Bezugspunkt dient. Für die Ermittlung der Positionsangaben der Begrenzungslinie um den Fehler wird die Stoffbahn angehalten, damit die Koordinaten der Begrenzungslinien mittels eines über der Stoffbahn angeordneten Koordinatenschlittens ermittelbar sind.

Die DE 33 25 125 C1 zeigt eine Anordnung zum Markieren von Fehlstellen an Materialbahnen, bei der die Materialbahn an einer Fehlerfeststellungs-Abtastvorrichtung sowie einer hiervon beabstandeten Markierungsvorrichtung vorbeigeführt wird. Von der Fehlerfeststellungs-Abtastvorrichtung kommende Signale werden nacheinander daraufhin analysiert, ob es sich um Fehler- oder Struktursignale handelt, wobei die ermittelten Fehlersignale mit ihren Bahnkoordinaten gespeichert werden. In Zeitabständen wird geprüft, ob zu der gerade an der Markierungsvorrichtung vorbeilaufenden Längskoordinate im Speicher ein Fehlersignal vorliegt, wobei in diesem Fall eine Markierung an den entsprechenden Bahnkoordinaten vorgenommen wird.

Der Erfindung liegt die Aufgabe zugrunde, ein Verfahren und eine Vorrichtung zum Detektieren, Kennzeichnen und Wiederauffinden von Fehlern eines Materialbandes großer Länge zu schaffen, bei denen das Detektieren und Kennzeichnen der Fehler ohne Anhalten des transportierten Materialbandes erfolgt und ein sicheres und schnelles Wiederauffinden von detektierten Fehlern mit relativ geringem Aufwand möglich ist.

Diese Aufgabe wird bei dem erfindungsgemäßen Verfahren dadurch gelöst, dass auf dem kontinuierlich vortransportierten Materialband über dessen Länge fortlaufend Positionsangaben angebracht werden,
bei Feststellen eines Fehlers eine zugehörige Fehlerpositionsangabe gespeichert wird und
beim nachfolgenden Wiederauffinden eines Fehlers eine aktuell vorliegende Anfangspositionsangabe festgestellt wird und das Materialband um eine aus der festgestellten Anfangspositionsangabe und der gespeicherten Fehlerpositionsangabe für den Fehler berechneten Förderlänge bewegt wird.

Die Aufgabe wird ferner mit durch eine erfindungsgemäße Vorrichtung gelöst mit einer optischen Inspektionseinrichtung zum Feststellen eines Fehlers während des Transports des Materialbandes,
einer Markierungseinrichtung zum Markieren des Materialbandes, durch die fortlaufend Positionsangaben auf dem kontinuierlich transportierten Materialband anbringbar sind,
einer Speichereinrichtung, durch die Fehlermessdaten der optischen Inspektionseinrichtung aufnehmbar und mit der dazu gehörigen Positionsangabe abspeicherbar sind, und
einer Umwickelsteuereinrichtung, die anhand der Fehlerpositionsangabe und einer festgestellten Anfangspositionsangabe vor Beginn eines Umwickelvorgangs die Abspullänge berechnet, um die das Materialband abgespult werden muss, um zum festgestellten Fehler zu gelangen.

Erfindungsgemäß werden somit ebenfalls Markierungen auf dem Materialband angebracht, um später die detektierten Oberflächenfehler wiederzufinden. Hierzu werden jedoch fortlaufend Positionsangaben auf dem Band angebracht, sodass das Markieren von der Fehlerdetektion unabhängig ist. Da auf dem Materialband fortlaufend Positionsangaben aufgebracht werden, kann beim späteren Wiederauffinden, z.B. bei einem Umwickelvorgang, aufgrund einer letzten Positionsangabe auf dem Bandmaterial und der gespeicherten Fehlerpositionsangabe eine Förderlänge ermittelt werden. Eine derartige Bestimmung der Förderlänge kann im einfachsten Fall direkt als Differenz der letzten Positionsangabe und der gespeicherten Fehlerpositionsangabe ermittelt werden.

Bei einem Wiederauffinden und Entfernen eines Defekts wird im allgemeinen das ganze Material um den detektierten Defekt herum entfernt, sodass eine sehr genaue Positionsangabe z.B. im Millimeter- oder Zentimeterbereich auf dem Materialband nicht notwendig ist. Somit kann ein Wiederauffinden des Fehlers bereits durch Markierungen in größeren Längenangaben erreicht werden, sodass einen die Kosten des Markierens wie z.B. durch Drucktinte und Materialverschleiß des Druckers, gesenkt werden können und zum anderen die Entladegeschwindigkeit nicht durch die Markierungseinrichtung begrenzt wird. Für die Positionsangabe ist dabei eine größere Skalierung ausreichend, die z.B. im Dezimeter- oder Meterbereich liegen kann; es kann auch eine Skalierung durch Positionsangaben von mehreren Metern z.B. alle 10 m oder in noch größeren Längenabschnitten vorgenommen werden.

Das erfindungsgemäße Verfahren kann insbesondere dadurch automatisiert werden, dass lediglich eine Anfangspositionsangabe beim Wiederauffinden des Fehlers einer Steuereinrichtung eingegeben werden muss und diese aufgrund der gespeicherten Fehlerpositionsangabe automatisch eine Abspullänge berechnet und das Materialband um die gewünschte Länge durch Steuerung einer Umwickeleinrichtung zurückbewegt. Da der Positionsaufdruck unabhängig von der Detektion der Fehler erfolgt, kann auf Echtzeitbedingungen während der Defektanalyse und Defektauswertung verzichtet werden. Hierdurch wird eine tiefere Analyse und automatische Klassifikation der Fehler ermöglicht. Eine derartige Klassifikation kann insbesondere auch dazu verwendet werden, die Fehler beim Wiederauffinden selektiv nach Schweregrad oder Art des Fehlers vorzunehmen. Zum Wiederauffinden kann eine Steuereinrichtung vorteilhafterweise das Bandmaterial in einer hohen Abspulgeschwindigkeit bis zu einem Vorspulabstand vor der Fehlerstelle abspulen, und anschließend das Band mit geringerer Geschwindigkeit abspulen, sodass ein genaues Auffinden und Begutachten des Fehlers von dem Bedienungspersonal ermöglicht wird. Weiterhin kann das Band bei Erreichen der errechneten Fehlerposition automatisch stoppen, sodass ein derartiger Stoppvorgang nicht vom Bedienungspersonal vorgenommen werden muss; grundsätzlich ist jedoch auch ein manuelles Stoppen zusätzlich zu einem derartigen automatisierten Stoppen oder anstelle des automatisierten Stoppens möglich.

Die Erfindung wird im folgenden anhand der beiliegenden Zeichnungen näher erläutert. Es zeigen:
Figur 1: einen ersten Schritt eines erfindunsgemäßen Verfahrens beim Entladen einer Fertigungsmaschine;
Figur 2: einen zweiten Schritt eines erfindungsgemäßen Verfahrens beim Wiederauffinden eines detektierten Fehlers.

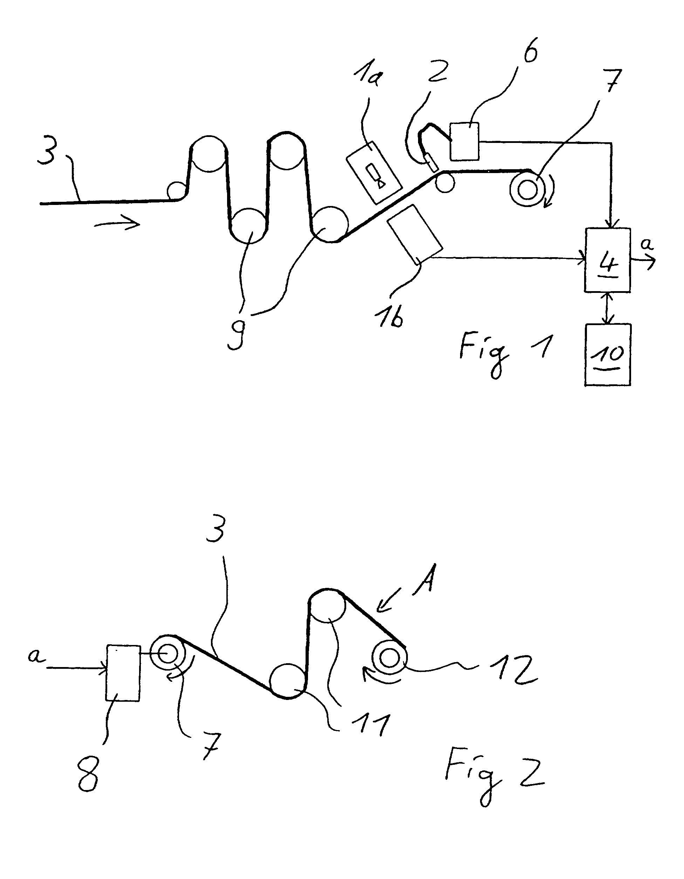

Ein Materialband 3, das z.B. aus Papier, Stahl oder einem Kunststoff bestehen kann, wird von einer Fertigungsmaschine als Endlosband ausgegeben und gemäß Figur 1 von Umlenkrollen 9 aufgenommen. Es wird anschließend von einer optischen Inspektionseinrichtung 1a, 1b auf schadhafte Defekte, wie z.B. Oberflächenfehler, untersucht. Die optische Inspektionseinrichtung kann dabei gemäß Figur 1 eine Projektionseinrichtung 1a und eine Sensoreinrichtung 1b aufweisen, durch die Oberflächenfehler als Veränderung im Bandmaterial erkannt werden. Das Materialband 3 wird anschließend an dem Druckkopf 2 eines Druckwerks 6 vorbeigeführt in einer Materialrolle 7 aufgewickelt.

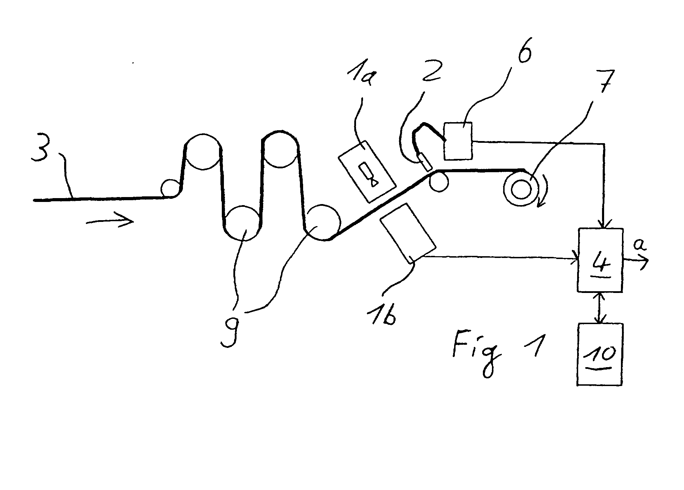

Erfindungsgemäß druckt das Druckwerk 6 über den Druckkopf 2 fortlaufend Positionsangaben auf das Materialband. Die Positionsangaben können insbesondere an einem Rand, beiden Rändern oder der Rückseite des betreffenden Materials angebracht werden. Der Aufdruck erfolgt vorzugsweise durch Tinte. Die Positionsangaben können in Abständen von z.B. Dezimeter, einen oder mehreren Metern, wie z.B. alle 10 Meter angebracht werden und entweder fortlaufende Nummern darstellen oder direkt eine Längenangabe seit Beginn des Aufwickelns angeben. Das Druckwerk kann dabei beispielsweise auch von einer Steuereinrichtung der Materialrolle 7, die die Aufspulgeschwindigkeit der Materialrolle 7 steuert und/oder mißt, gesteuert werden. Die aufgedruckten Positionsangaben werden von dem Druckwerk 6 an eine Steuereinrichtung 4 übermittelt. Die Steuereinrichtung 4 nimmt weiterhin Fehlerdaten der Sensoreinrichtung 1b auf, so daß bei Entdecken eines Fehlers, wie z.B. eines Oberflächenfehlers, zueinander gehörende Werte von der Speichereinrichtung 4 aufgenommen werden können. Die Steuereinrichtung 4 speichert die Daten der Positionsangabe und des Fehlers in einer Speichereinrichtung 10, die z.B. auch eine interne Speichereinrichtung der Steureinrichtung 4 sein kann. Die Steuereinrichtung 4 kann dabei die von der Sensoreinrichtung 1b ausgegebenen Daten zunächst verwerten und aufgrund der Sensordaten feststellen, was für ein Fehler detektiert wurde, insbesondere die Art und die Schwere eines derartigen Defekts bestimmen. Nachdem nun die Art des Fehlers festgestellt worden ist, wird eine Angabe über die Art des Fehlers zusammen mit der zu diesem Zeitpunkt von dem Druckwerk 6 übermittelten Positionsangabe in der Speichereinrichtung 10 gespeichert. Die Steuereinrichtung kann beim späteren Umwickeln diese gespeicherten Daten wiederum der Speichereinrichtung 10 entnehmen und mit dem Pfeil a gekennzeichnet an eine Umwickelsteuereinrichtung 8 weitergeben, die in Figur 2 gezeigt ist.

Zum Umwickeln werden gemäß Figur 2 die in der Speichereinrichtung 10 gespeicherten Daten über die Aufwickelsteuereinrichtung 4 an die Umwickelsteuereinrichtung 8 weitergegeben. Eine Anfangspositionsangabe wird am Ende der ersten Materialrolle 7 festgestellt. Diese Anfangspositionsangabe kann mit der zuletzt auf das Materialband 3 aufgedruckten Positionsangabe übereinstimmen, bevor das Bandmaterial abgeschnitten wurde und die Materialrolle 7 ausgetauscht wurde. Da jedoch nach der Beendigung des Aufwickelvorgangs evtl. noch undefiniert lange Stücke vom Band abgeschnitten wurden, kann auch ein anderer Wert vorliegen. Nachdem nun die Anfangspositionsangabe auf dem Materialband 3 abgelesen wurde und in die Umwickelsteuervorrichtung 8 eingegeben wurde, berechnet die Steuereinrichtung an Hand der Fehlerpositionsangaben und der eingegebenen Anfangspositionsangabe die Abspullänge, um die das Materialband abgespult werden muß, um zu einer schadhaften Stelle zu kommen. Die erste Materialrolle 7 und eine zweite Materialrolle 12 werden nun entsprechend von der Umwickelsteuerung 8 derartig angetrieben, daß das Materialband 3 über Umlenkrollen 11 soweit verfahren wird, bis der nächste Fehler bzw. ein gewünschter Fehler für einen Beobachter von der mit A gekennzeichneten Stelle in Pfeilrichtung betrachtet werden kann. Hierzu kann das Materialband 3 zunächst schnell und kurz vor Erreichen der gewünschten Stelle langsam verfahren werden und bei Erreichen der Fehlerposition gestoppt werden. Der Beobachter kann nunmehr den Fehler erkennen und eine Bandlänge um den Fehler herum aus dem Materialband 3 herausschneiden.

## Patentansprüche

1. Verfahren zum Detektieren, Kennzeichnen und Wiederauffinden von Fehlern eines kontinuierlich aufgewickelten Materialbandes (3) großer Länge, bei dem das Materialband (3) während seines Transports auf Fehler überprüft wird, **dadurch gekennzeichnet, dass** auf dem kontinuierlich vortransportierten Materialband (3) über dessen Länge fortlaufend Positionsangaben angebracht werden,
bei Feststellen eines Fehlers eine zugehörige Fehlerpositionsangabe gespeichert wird und
beim nachfolgenden Wiederauffinden eines Fehlers eine aktuell vorliegende Anfangspositionsangabe festgestellt wird und das Materialband um eine aus der festgestellten Anfangspositionsangabe und der gespeicherten Fehlerpositionsangabe für den Fehler berechneten Förderlänge bewegt wird.

2. Verfahren nach Anspruch 1, **dadurch gekennzeichnet, dass** die Positionsangaben auf einem Rand, beiden Rändern oder der Rückseite des Materialbandes (3) angebracht werden.

3. Verfahren nach Anspruch 1 oder 2, **dadurch gekennzeichnet, dass** die Positionsangaben auf das Materialband aufgedruckt werden.

4. Verfahren nach einem der Ansprüche 1 bis 3, **dadurch gekennzeichnet, dass** die zum Wiederauffinden des Fehlers festgestellte Anfangspositionsangabe an einem Ende des Materialbands vorliegt.

5. Verfahren nach einem der Ansprüche 1 bis 4, **dadurch gekennzeichnet, dass** die Förderlänge zum Wiederauffinden eines Fehlers aus einer Differenz der aktuell vorliegenden Anfangspositionsangabe und der Fehlerpositionsangabe berechnet wird.

6. Verfahren nach einem der Ansprüche 1 bis 5, **dadurch gekennzeichnet, dass** eine Feststellung, ob ein Fehler vorliegt, durch Auswertung der gemessenen Daten nach der Messung auf Fehler vorgenommen wird.

7. Verfahren nach Anspruch 6, **dadurch gekennzeichnet, dass** die Messung der Fehler und die Anbringung der Positionsangaben unabhängig voneinander vorgenommen werden.

8. Verfahren nach einem der Ansprüche 1 bis 7, **dadurch gekennzeichnet, dass** das Materialband (3) auf Oberflächenfehler überprüft wird.

9. Verfahren nach einem der Ansprüche 1 bis 8, **dadurch gekennzeichnet, dass** bei der Erstellung des Fehlers nach der Art des Fehlers unterschieden wird und Daten über die Art des Fehlers zusammen mit der Fehlerpositionsangabe gespeichert werden.

10. Verfahren nach Anspruch 9, **dadurch gekennzeichnet, dass** die Fehler beim Wiederauffinden in Abhängigkeit von ihrer ermittelten Art angefahren werden.

11. Verfahren nach einem der Ansprüche 1 bis 11, **dadurch gekennzeichnet, dass** das Wiederauffinden des oder der Fehler bei einem Umwickelvorgang des Materialbandes vorgenommen wird.

12. Verfahren nach Anspruch 11, **dadurch gekennzeichnet, dass** die Umwickelgeschwindigkeit zum Wiederauffinden der Fehler mit den Positionsangaben auf dem Materialband abgeglichen wird.

13. Vorrichtung zum Detektieren, Kennzeichnen und Wiederauffinden eines Fehlers eines kontinuierlich aufgewickelten Materialbandes (3) großer Länge, insbesondere zur Durchführung eines Verfahrens nach einem der Ansprüche 1 bis 12, mit
einer optischen Inspektionseinrichtung (1) zum Feststellen eines Fehlers während des Transports des Materialbandes (3),
einer Markierungseinrichtung (6) zum Markieren des Materialbandes (3), durch die fortlaufend Positionsangaben auf dem kontinuierlich transportierten Materialband (3) anbringbar sind,
einer Speichereinrichtung (4, 10), durch die Fehlermessdaten der optischen Inspektionseinrichtung (1) aufnehmbar und mit der dazu gehörigen Positionsangabe abspeicherbar sind, und
einer Umwickelsteuereinrichtung (8), die anhand der Fehlerpositionsangabe und einer festgestellten Anfangspositionsangabe vor Beginn eines Umwickelvorgangs die Abspullänge berechnet, um die das Materialband (3) abgespult werden muss, um zum festgestellten Fehler zu gelangen.

14. Vorrichtung nach Anspruch 13, **dadurch gekennzeichnet, dass** die Markierungseinrichtung ein Druckwerk (2,6) ist, durch das die Positionsangaben auf das Materialband, vorzugsweise auf dessen Rand, dessen Ränder oder dessen Rückseite aufdruckbar sind.

## Claims

1. Method for detecting, marking and relocating defects of a continuously wound-up material web (3) of a great length, in which the material web (3) is checked for defects during its transport, **characterized in that** position indications are continuously provided on the continuously advanced material web (3) over its length,
if a defect is ascertained, an associated defect position indication is stored and
in the subsequent relocation of a defect, a currently applicable starting position indication is ascertained and the material web is moved by a conveying length calculated from the ascertained starting position indication and the stored defect position indication for the defect.

2. Method according to Claim 1, **characterized in that** the position indications are provided on one edge, both edges or the rear side of the material web (3).

3. Method according to Claim 1 or 2, **characterized in that** the position indications are printed onto the material web.

4. Method according to one of Claims 1 to 3, **characterized in that** the starting position indication ascertained for relocating the defect is at one end of the material web.

5. Method according to one of Claims 1 to 4, **characterized in that** the conveying length for relocating a defect is calculated from a difference between the currently applicable starting position indication and the defect position indication.

6. Method according to one of Claims 1 to 5, **characterized in that** an ascertainment whether a defect is present is performed by evaluating the measured data after the measurement for defects.

7. Method according to Claim 6, **characterized in that** the measurement of the defects and the provision of the position indications are performed independently of one another.

8. Method according to one of Claims 1 to 7, **characterized in that** the material web (3) is checked for surface defects.

9. Method according to one of Claims 1 to 8, **characterized in that**, when the defect is produced, the type of defect is distinguished and data on the type of defect are stored together with the defect position indication.

10. Method according to Claim 9, **characterized in that**, during relocation, the defects are moved to on the basis of their determined type.

11. Method according to one of Claims 1 to 10, **characterized in that** the relocation of the defect or defects is performed during a re-winding operation on the material web.

12. Method according to Claim 11, **characterized in that**, for relocating the defects, the re-winding speed is adjusted with the position indications on the material web.

13. Device for detecting, marking and relocating a defect of a continuously wound-up material web (3) of a great length, in particular for carrying out a method according to one of Claims 1 to 12, with
an optical inspection device (1) for ascertaining a defect during the transport of the material web (3),
a marking device (6) for marking the material web (3), by which position indications can be continuously provided on the continuously transported material web (3),
a memory device (4, 10), by which defect measurement data of the optical inspection device (1) can be recorded and stored with the associated position indication, and
a re-winding control device (8), which calculates, on the basis of the defect position indication and an ascertained starting position indication before the beginning of a winding-up operation, the unwinding length by which the material web (3) must be unwound in order to reach the ascertained defect.

14. Device according to Claim 13, **characterized in that** the marking device is a printing unit (2, 6), by which the position indications can be printed onto the material web, preferably on its edge, its edges or its rear side.

## Revendications

1. Procédé pour détecter, caractériser et retrouver des défauts sur une bande de matière (3) de grande longueur enroulée en continu, dans lequel la bande de matière (3) fait l'objet d'un examen des défauts pendant son transport,
**caractérisé en ce que** sur la bande de matière (3) transportée en avant en continu, des données de position, sont appliquées en continu suivant sa longueur,
en cas de constatation d'un défaut, une donnée correspondante de position de défaut est mémorisée et
lorsqu'on retrouve ensuite un défaut, une donnée actuelle et présente de position de début est déterminée, et la bande de matière est déplacée suivant une longueur de transport calculée à partir de la donnée déterminée de position de début et de la donnée de position de défaut mémorisée.

2. Procédé selon la revendication 1, **caractérisé en ce que** les données de position sont appliquées sur un bord, les deux bords ou sur le côté dorsal de la bande de matière (3).

3. Procédé selon la revendication 1 ou 2, **caractérisé en ce que** les données de position sont imprimées sur la bande de matière.

4. Procédé selon l'une des revendications 1 à 3, **caractérisé en ce que**, la donnée de position de début déterminé est présent sur une extrémité de la bande de matière.

5. Procédé selon l'une des revendications 1 à 4, **caractérisé en ce que** la longueur de transport pour retrouver un défaut est calculée à partir d'une différence la donnée de position de début actuellement présente et la donnée de position du défaut.

6. Procédé selon l'une des revendications 1 à 5, **caractérisé en ce qu'**il est procédé à une détermination qu'il existe un défaut à partir de l'évaluation des données mesurées après la mesure sur un défaut.

7. Procédé selon la revendication 6, **caractérisé en ce que** la mesure du défaut et l'application des données de position sont effectuées indépendamment l'une de l'autre.

8. Procédé selon l'une des revendications 1 à 7, **caractérisé en ce qu'**on examine la bande de matière (3) pour détecter les défauts de surface.

9. Procédé selon l'une des revendications 1 à 8, **caractérisé en ce que** lors de l'apparition du défaut, on fait une distinction selon le type du défaut et on mémorise des données sur le type du défaut en association avec la donnée de position du défaut.

10. Procédé selon la revendication 9, **caractérisé en ce que** le défaut, lorsqu'il est retrouvé, est rapporté en fonction de son type déterminé.

11. Procédé selon l'une de revendications 1 à 11, **caractérisé en ce que**, pour retrouver le ou les défauts, on procède à une course d'enroulement de la bande de matière.

12. Procédé selon la revendication 11, **caractérisé en ce que** la vitesse d'enroulement, pour retrouver le défaut, est réglée avec les données de position sur la bande de matière.

13. Dispositif pour détecter, caractériser et retrouver des défauts sur une bande de matière (3) de grande longueur enroulée en continu, dans lequel la bande de matière (3) fait l'objet d'un examen des défauts pendant son transport, **caractérisé en ce que** sur la bande de matière (3) transportée en avant en continu, des données de position sont appliquées en continu suivant sa longueur,
en cas de constatation d'un défaut, une donnée correspondante de position de défaut est mémorisée et
lorsqu'on retrouve ensuite un défaut, une donnée actuelle et présente de position de début est déterminée, et la bande de matière est déplacée suivant une longueur de transport calculée à partir de la donnée déterminée de position de début et de la donnée de position de défaut mémorisée.

14. Dispositif selon la revendication 13, **caractérisé en ce que** le dispositif de marquage est un appareil d'impression (2,6) avec lequel les données de position peuvent être imprimées sur la bande de matière, de préférence sur son bord, ses bords ou son côté dorsal.
